# EUROPÄISCHE PATENTANMELDUNG

(11) **EP 1 184 145 A2**
(43) Veröffentlichungstag der Anmeldung: **06.03.2002**
(21) Anmeldenummer: 01120384.1
(22) Anmeldetag: 25.08.2001
(51) Int. Cl.: B28B 1/08, B28B 1/50

(54) **Verfahren und Vorrichtung zur Herstellung von Bauelementen aus Porenbeton**

(30) Priorität: 28.08.2000 DE 10041834
(71) Anmelder: Greisel, Franz Xaver, jun., 94496 Ortenburg (DE); Greisel, Christine, 94496 Ortenburg (DE)
(72) Erfinder: Greisel, Franz Xaver, jun., 94496 Ortenburg (DE); Greisel, Christine, 94496 Ortenburg (DE)
(74) Vertreter: Strasser, Wolfgang

(57) **Zusammenfassung**

Bei einem Verfahren zur Herstellung von Bauelementen aus Porenbeton wird eine wäßrige Schlämme aus den Grundmaterialien der Porenbetonmischung nach Zugabe eines Treibmittels zur Erzeugung einer gieß- und treibfähigen Porenbetonmasse durchgemischt und in einen Formkasten (1) eingefüllt. Zumindest während des Treib- und Steigvorgangs wird über der im Formkasten enthaltenen Schlämme zur Qualitätssteigerung und Treibmitteleinsparung ein Unterdruck erzeugt, durch den die Porenbetonmasse gleichmäßig und ganzflächig bis zum Formkastenrand hochgesaugt wird.

## Beschreibung

Die Erfindung betrifft ein Verfahren zur Herstellung von Bauelementen aus Porenbeton der im Oberbegriff des Anspruches 1 genannten Art, sowie eine Vorrichtung zu seiner Durchführung.

Bei einem derartigen Verfahren wird zunächst eine aus den Grundmaterialien der Porenbetonmischung bestehende, wäßrige Schlämme in einer Mischvorrichtung mit einem zugesetzten Treibmittel, beispielsweise Aluminiumpulver vermischt, so daß eine gieß- und treibfähige Porenbetonmasse entsteht. Bei jedem Mischvorgang wird dabei eine solche Menge hergestellt, wie sie zum Befüllen eines Formkastens erforderlich ist, in welchem man die Masse dann treiben und soweit ansteifen läßt, daß sie aus der Form entnommen und gegebenenfalls in Bauteile der gewünschten Größe zerschnitten werden kann, die dann in einem Autoklaven einem hydrothermalen Härtungsprozeß unterworfen werden.

Nach dem Stand der Technik werden die befüllten Formkästen in einer Ruhezone abgestellt, sodaß die Porenbetonmasse treiben, abbinden und ansteifen kann. Aus der DE 198 00 182 C2 ist bekannt, daß die befüllten Formkästen zum Abbinden und Ansteifen unter Wärmeeinwirkung in Wärme- und Heizkammern verweilen, bis der so gebildete Porenbetonkörper aus der Form entnommen und in Bauteile zerschnitten wird. Aus der EP 0 644 024 Bl ist auch bekannt, die befüllten Formen während des Steigvorganges in Rüttelschwingungen zu versetzen, um eine Homogenisierung der Mischung zu erzielen, so daß Luftblasen ausgetrieben und die Lunkerbildung vermindert wird. Desweiteren ist es aus der DE 198 48 204 Al bekannt, Betonsteinplatten aus Schwerbeton im Formkasten mit Rüttlern und Unterdruck zu behandeln, um eine gleichmäßigere Verteilung und bessere Verdichtung dadurch zu erhalten, daß Luft- und Wasserporen ausgetrieben werden.

Der Fachmann weiß, daß bei den bekannten Verfahrenstechniken die Porenbetonmasse beim Steigvorgang sehr unruhig ist, insbesondere unterschiedlich steigt und dabei sogenannte Mondlandschaften bildet. Auch geschieht es manchmal, daß der entstehende "Kuchen" beim Abbinden in sich zusammenfällt oder nach dem Abbinden um einige Zentimeter nach unten absetzt, sodaß der gebildete Porenbetonkörper beim Schneiden nicht die gewünschten Bauelementeformen und Abmaße erreicht und deshalb unbrauchbar ist. Unregelmäßige Porenbilder, d. h. eine verzerrte Porenstruktur, sowie kleinere Poren im Berich des Formenbodens im Vergleich zu denen an der Oberfläche des "Kuchens" sind die Ursache für nicht optimale Lambda-und Druckfestigkeitswerte.

Dem gegenüber liegt der Erfindung die Aufgabe zugrunde, ein Verfahren der im Oberbegriff des Anspruch 1 genannten Art so weiterzubilden, daß ein gleichmäßigeres Steigen der Porenbetonmasse gewährleistet, ein nachträgliches Zusammenfallen oder Einsinken vermieden und eine einheitlichere Porengröße erzielt wird.

Zur Lösung dieser Aufgabe sieht die Erfindung die im Anspruch 1 zusammengefaßten Merkmale vor.

Dadurch, daß zumindest während des Treib- und Steigvorganges über dem Formkasten ein Unterdruck erzeugt wird, muß die steigende Porenbetonschlämme einen im Vergleich zum normalen Luftdruck wesentlich kleineren Druck überwinden und kann somit gleichmäßig, ruhig und ganzflächig bis zum Forkastenrand oder sogar darüber hinaus hochgesaugt werden. Durch den Unterdruck wird ein sehr gleichmäßiges Porenbetongefüge erzeugt und es entstehen keine schweren Oberflächen und Verdichtungen, welche ein Zusammenfallen der Masse beim Abbindevorgang, sowie ein Absetzen nach dem Abbinden bewirken könnten. Eine Steuerung bzw. Regulierung des Unterdrucks ermöglicht, daß verschiedene Festigkeitsklassen und Rohdichten erzielt werden können, weil durch die Stärke des Unterdrucks das Porenbild und die Größe der Porenstruktur beeinflußt werden können.

Überraschender Weise kann weniger Treibmittel verwendet werden, und es lassen sich höhere Druckfestigkeitswerte sowie bessere Lambdawerte (Wärmedämmwerte) erzielen.

Eine länger andauernde Beaufschlagung mit Unterdruck ermöglicht nicht nur die Einsparung von teueren Treibmitteln, üblicher Weise Aluminiumpulver, sondern auch kürzere Taktzeiten, da ein schnelleres Ansteifen erfolgt, was zu kürzeren Standzeiten in der Ruhezone führt. Auch werden ein zügigeres Fräsen und Schneiden in der Bearbeitungsstraße sowie kürzere Härtezeiten erreicht, da dank der gleichmäßigeren Porenstruktur eine leichtere Härtung im Autoklaven möglich ist. Da der Mischvorgang onehin eine gewisse Zeit benötigt, ist für die Beaufschlagung mit Unterdruck ausreichend Zeit vorhanden, sodaß keine Verlängerungen der Taktzeiten entstehen.

Diese und weitere Vorteile des erfindungsgemäßen Verfahrens, sowie Merkmale der zu seiner Durchführung geeigneten Vorrichtungen sind in den Unteransprüchen niedergelegt.

Die Erfindung wird im folgenden anhand eines Ausführungsbeispiels unter Bezugnahme auf die Zeichnung beschrieben, in dieser zeigt die einzige Figur eine schematische Darstellung einer Ausführungsform einer unterdruckerzeugenden Vorrichtung mit einem darunter angeordneten Formkasten.

Es wird davon ausgegangen, daß der Formkasten zunächst auf Schienen mit Transporteinrichtungen unter eine Misch- und Gießvorrichtung gefahren wird, in der die zur Herstellung von Bauelementen aus Porenbeton vorbereitete Schlämme portionsweise mit einem Treibmittel, beispielsweise Aluminiumpulver versetzt und zur Erzeugung einer gieß- und steigfähigen Porenbetonmasse gut durchgemischt wird. Durch Öffnen des Absperrorganes unter dem Mischbehälter fließt die so erzeugte Schlämme in einen teleskopartig ausgebildeten und hydraulisch heb- und senkbaren Auslauf und durch eine an vier Stahlseilen heb- und senkbare, in Rüttelschwingungen versetzte Siebanordnung, welche am Formkastenboden abgesenkt ist und anschließend aus der Porenbetonmasse hindurch und aus ihr herausgezogen wird, in den Formkasten. (Alle diese Vorrichtungen sind dem Fachmann bestens bekannt und in der Zeichnung nicht dargestellt.)

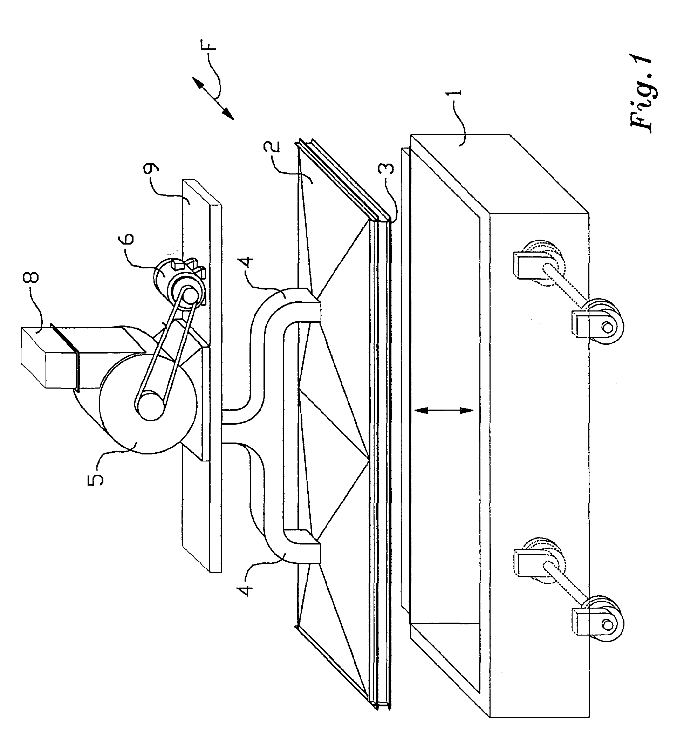

Bevor der Steig- oder Treibvorgang einsetzt, wird der Formkasten mit der wäßrigen Schlämme in eine Ruhezone gefahren und unter einer unterdruckerzeugenden Vorrichtung positioniert, die gemäß Fig. 1 im Wesentlichen aus einer auf den oberen Rand des Formkastens 1 aufsetzbaren Haube 2, einer Dichtanordnung 3, zwei von oben her in den Raum unter der Haube 2 mündenden Absaugschächten 4, 4, einem durch einen Elektromotor 6 angetriebenen Ventilator bzw. Gebläse 5 sowie einem Absaugschacht 8 besteht.

Noch vor Beginn des Steigvorganges wird diese unterdruckerzeugende Vorrichtung 2 bis 8, die an einer heb- und senkbaren Hubrahmentraverse 9 befestigt ist, auf den Formkasten 1 abgesenkt, so daß das volle Gewicht der Vorrichtung 2 bis 9 auf dem Formkasten 1 aufliegt.

An der Vorrichtung 2 bis 8 angebrachte Näherungs- und Endschalter korrigieren die Position des Hubrahmens während des Aufsetzens auf den Formkasten 1, so daß die Vorrichtung 2 bis 8 und der Formkasten 1 mit nicht dargestellten Arretierungen genau zusammenkoppeln und die an der Unterseite der Haube 2 umlaufende Dichtung 3, die vorzugsweise aus Moosgummi besteht, präzise abdichten kann.

Um ein besonders gutes Anliegen der Dichtung 3 am oberen Rand des im Regelfall aus Stahl bestehenden Formkastens 1 zu gewährleisten, kann in den Dichtungsgummi ein magnetisches Material eingearbeitet sein.

Sobald die unterdruckerzeugende Vorrichtung 2 bis 8 passend auf dem Formkasten 1 aufliegt, wird durch Endschalter die den Unterdruck erzeugende Absaugung freigegeben. Die Wirkung des zur Vermeidung von Anlaufzeiten ständig laufenden Gebläses 5 wird durch das Öffnen von nicht dargestellten Absperrklappen freigegeben, sodaß durch die Schächte 4, 4 Luft aus der Haube 2 abgesaugt und zwischen Haube 2 und der treibenden Schlämme im Formkasten 1 ein Unterdruck erzeugt wird. Durch Regelung der Motorgeschwindigkeit und/oder der erwähnten, nicht dargestellten Klappen in den Absaugschächten 4 kann die Saugleistung bzw. der Unterdruck auf jeden gewünschten Wert eingestellt werden. Die Saugleistung und Saugdauer müssen in Abhängigkeit von den jeweils gewünschten Festigkeitsklassen und Rohdichten, sowie weiteren Qualitätserfordernissen gewählt werden. Die genauen Zusammenhänge lassen sich durch einfache Versuche ermitteln.

Für jeden der beiden Absaugschächte 4, 4 ist eine eigene Luftsteuerklappe vorgesehen, um gegebenenfalls bei einseitigem Treiben der Porenbetonmasse im Formkasten 1 durch getrenntes Verstellen dieser Klappen auf einer Seite der Haube 2 mehr und auf der anderen weniger stark zu saugen und so den einseitigen Treibvorgang auszugleichen.

In der Regel beginnt der Saugvorgang vor dem Steigen der Schlämme und wird nach dem Abbinden der Schlämme dadurch beendet, daß die in beide Absaugschächte 4, 4 sowie deren Verbindungsleitung eingebauten, vorzugsweise pneumatisch einstellbaren (nicht dargestellten) Luftsteuerungsklappen geschlossen werden, damit sich zwischen der Absaughaube 2 und der Schlämme der normale Luftdruck bilden kann.

Danach wird die unterdruckerzeugende Vorrichtung 2 bis 9 vom Formkasten 1 abgehoben und mit Hilfe eines Kranes in Richtung des Doppelpfeiles F zum nächsten Formkasten gefahren. Sofern von der Mischanlage kontinuierlich befüllte Formkästen in die Ruhezone gelangen, läuft das Gebläse 5 ununterbrochen, um Anlaufzeiten zu vermeiden. Nur in Pausen oder längeren Standzeiten wird der Motor 6 abgestellt. Die Abluft vom Gebläse 5 wird über den Absaugschacht 8 in die Halle oder mit einem flexiblen Lüftungsschlauch ins Freie geblasen.

Bei einer anderen (nicht dargestellten) Ausführungsform kann die absenkbare Haube einen größeren Grundriß als der Formkasten 1 und eine solche Höhe besitzen, daß sie eine Glocke bildet, die um den Formkasten herum bis auf den Hallenboden abgesenkt werden kann. Auch eine solche Glocke besitzt eine der Dichtung 3 entsprechende, um ihren ganzen unteren Rand herum umlaufende Dichtung, die dann allerdings vorzugsweise so ausgebildet ist, daß sie in die Vertiefungen dichtend eingreift, in welche die Schienen, auf denen der Formkasten 1 läuft, im Hallenboden eingelassen sind.

Bei einer weiteren, ebenfalls nicht dargestellten Ausführungsform sind in der Ruhezone eine oder mehrere Unterdruckkammern vorgesehen, in welche jeweils ein oder mehrere Formkästen hineingefahren werden können. Zu diesem Zweck besitzt jede dieser Unterdruckkammern auf jeder ihrer Stirnseiten druckdicht verschließbare Tore, durch welche die Formkästen auf der einen Seite in die Unterdruckkammer hinein und auf der gegenüberliegenden Seite wieder herausgefahren werden können. Bei dieser Anordnung, bei der alle Unterdruckkammern mit ein und dem selben Gebläse beziehungsweise mit ein und derselben Unterdruck-Pumpe verbunden sein können, wird vor dem Öffnen eines der Tore die betreffende Unterdruckkammer durch das Schließen einer entsprechenden steuerbaren Klappe von der Unterdruck-Quelle getrennt und belüftet, so daß durch das Ein- bzw. Ausfahren der Formkästen kein Druckverlust entsteht und die Tore leicht geöffnet werden können. Auch hier sind die mit dem Hallenboden abschließenden Dichtungen der Tore so ausgebildet, daß sie in die Schienen-Vertiefungen dichtend eingreifen. Die Steuerung der erwähnten Tore und Klappen kann dabei halb- oder vollautomatisch erfolgen.

Auch bei den beiden ersten Ausführungsformen der Unterdruck-Erzeugungseinrichtung können Belüftungsventile vorgesehen sein, die nach dem Schließen der die Verbindung zum Gebläse unterbrechenden Luftsteuerklappen in kontrollierter Weise geöffnet werden, um ein definiertes Ansteigen des unter der Haube herrschenden Drucks zu gewährleisten.

Mit diesen Einrichtungen ist es auch in jedem Fall möglich, den Unterdruck während des Saugvorgangs erforderlichenfalls jederzeit zu erhöhen, abzusenken oder völlig abzuschalten, d. h. über der Porenbetonmasse wieder Atmosphärendruck herzustellen.

Die Dichtungen können aus einem Profilgummi bestehen, sind aber vorzugsweise aus Moosgummi hergestellt.

Bei den zur Erprobung des erfindungsgemäßen Verfahrens durchgeführten Versuchen lag der Maximalwert des erzeugten Unterdrucks vorzugsweise im Bereich von bis zu 300 mb, d. h. unter der Haube bzw. Glocke bzw. in der Unterdruckkammer herrschte ein Druck zwischen 700 und 1000 mb, wobei der jeweils maximale Unterdruckwert je nach herzustellender Rohdichte bzw. Druckfestigkeit variiert wurde.

## Patentansprüche

1. Verfahren zur Herstellung von Bauelementen aus Porenbeton, das folgende Schritte umfaßt:
- Herstellen einer wäßrigen Schlämme aus den Grundmaterialien der Porenbetonmischung,
- Zugabe eines Treibmittels zur Schlämme,
- Durchmischen der Schlämme zur Erzeugung einer gieß- und treibfähigen Porenbetonmasse,
- Einfüllen der Porenbetonmasse durch eine Siebanordnung hindurch in den Formkasten,
**dadurch gekennzeichnet, daß** zumindest während des Treib- und Steigvorganges über der im Formkasten (1) befindlichen Schlämme ein Unterdruck erzeugt wird.

2. Verfahren nach Anspruch 1, **dadurch gekennzeichnet, daß** die Erzeugung des Unterdrucks bereits vor dem Treibvorgang einsetzt.

3. Verfahren nach einem der Ansprüche 1 oder 2, **dadurch gekennzeichnet, daß** die die Dauer der Erzeugung des Unterdrucks und dessen Höhe den Qualitätserfordernissen angepaßt werden.

4. Verfahren nach einem der Ansprüche 1 bis 3, **dadurch gekennzeichnet, daß** der erzeugte Unterdruck während des Saugvorganges veränderbar ist.

5. Verfahren nach einem der Ansprüche 1 bis 4, **dadurch gekennzeichnet, daß** der Unterdruck in verschiedenen Bereichen über der Schlämme auf unterschiedliche Höhe einstellbar ist, um ungleichmäßige Treibvorgänge auszugleichen.

6. Verfahren nach einem der vorhergehenden Ansprüche, **dadurch gekennzeichnet, daß** während des Saugvorganges der Formkasten (1) in Rütteischwingungen versetzt wird.

7. Vorrichtung zur Durchführung des Verfahrens nach einem der vorhergehenden Ansprüche, **dadurch gekennzeichnet, daß** eine über der Schlämme zumindest während des Treib- und Steigvorganges einen Unterdruck erzeugende Vorrichtung (2 bis 8) vorgesehen ist.

8. Vorrichtung nach Anspruch 7, **dadurch gekennzeichnet, daß** die den Unterdruck erzeugende Vorrichtung aus einer Absaughaube (2), einem Unterdruckerzeuger (5), einem Elektromotor (7), sowie Absaugschächten (4) besteht.

9. Vorrichtung nach Anspruch 7, **dadurch gekennzeichnet, daß** der Unterdruckerzeuger ein Gebläse (5) ist.

10. Vorrichtung nach Anspruch 7, **dadurch genkennzeichnet,** daß der Unterdruckerzeuger eine motorbetriebene Vakuumpumpe ist.

11. Vorrichtung nach einem der Ansprüche 8 bis 10, **dadurch gekennzeichnet, daß** an der Unterkante der Absaughaube (2) eine umlaufende Dichtung (3) angebracht ist, die im abgesenkten Zustand mit dem oberen Rand des Formkastens (1) in dichtenden Eingriff tritt.

12. Vorrichtung nach Anspruch 7, **dadurch gekennnzeichnet,** daß die den Unterdruck erzeugende Vorrichtung aus wenigstens einer Unterdruckkammer besteht, in die wenigstens ein Formkasten (1) eingebracht werden kann.

13. Vorrichtung nach Anspruch 7, dadurch gekennnzeichnet, daß die den Unterdruck erzeugende Vorrichtung eine Glocke umfaßt, die so über den ganzen Formkasten (1) gestülpt werden kann, daß sie mit dem Hallenboden in dichtenden Eingriff tritt.

14. Vorrichtung nach einem der Ansprüche 7 bis 12, **dadurch gekennzeichnet, daß** die den Unterdruck erzeugende Vorrichtung Luftsteuerklappen umfaßt, mit welchen die Luftabsaugung geregelt, gesteuert und gestoppt werden kann.
